# EUROPEAN PATENT SPECIFICATION

(11) **EP 4 091 845 B1**
(45) Date of publication and mention of the grant of the patent: **29.01.2025**
(21) Application number: 22173027.8
(22) Date of filing: 12.05.2022
(51) Int. Cl.: B60D 5/00

(54) **DEVICE FOR CONNECTING A FIRST AND A SECOND UNIT OF AN ARTICULATED VEHICLE**
VORRICHTUNG ZUM VERBINDEN EINER ERSTEN UND EINER ZWEITEN EINHEIT EINES GELENKFAHRZEUGS
DISPOSITIF DE CONNEXION D'UNE PREMIÈRE ET D'UNE SECONDE UNITÉ D'UN VÉHICULE ARTICULÉ

(30) Priority: 20.05.2021 IT 202100013043
(43) Date of publication of application: 23.11.2022
(73) Proprietor: P.E.I. Protezioni Elaborazioni Industriali S.r.l., 40012 Calderara di Reno (Bologna) (IT)
(72) Inventor: BENEDETTI, Michele, 40033 CASALECCHIO DI RENO (BOLOGNA) (IT); MERCANTINI, Matteo, 40134 BOLOGNA (IT)
(74) Representative: Milli, Simone

(56) References cited:
- WO-A1-2019/216759
- DE-A1- 2 945 441

## Description

This invention relates to a device for connecting a first and a second unit of an articulated vehicle.

The invention applies in particular, but without limiting the invention, to the technical sector of articulated buses, where there are a plurality of technical prior art solutions to allow the connection together of two units of the articulated bus, respectively the front unit and the rear unit.

As is known, in order to allow the circulation on the road, the connection between the two units must have predetermined features and functions.

More specifically, the two units must be connected to each other in such a way as to allow the relative movement on a horizontal plane of the two units, so as to safely deal with bends in the road and changes of direction.

Moreover, to allow the vehicle to deal with any irregularities of the road surface (for example, roughness, bumps, holes, etc.), and any change in gradient of the road surface, is necessary to allow the relative movement of the two units in a vertical plane.

In the sector in question, there are various prior art connecting devices.

An example of these devices is known from prior art documents US8282306, US6296414, US7338060, DE2945441A1.

A strongly felt need in the sector in question is that of having a connecting device which can reduce the relative overall dimensions during the transport step, that is to say, in the logistics movement step before installation on board the articulated vehicle, guaranteeing at the same time the integrity of the components during transport.

The aim of the invention is therefore to satisfy the need expressed in the introduction, that is to say, to provide a connecting device between two units of an articulated vehicle which is simple and allows the relative dimensions to be reduced during the transport step.

The invention, with reference to the above aims, is defined by the annexed claims and its advantages are more apparent from the detailed description which follows, with reference to the accompanying drawings which illustrate a preferred, non-limiting embodiment of the invention and in which:
- Figure 1 shows a schematic front view of a first embodiment of the connecting device according to the invention in a first configuration;
- Figure 2 shows a schematic front view of the embodiment of the connecting device, illustrated in Figure 1, in a second configuration;

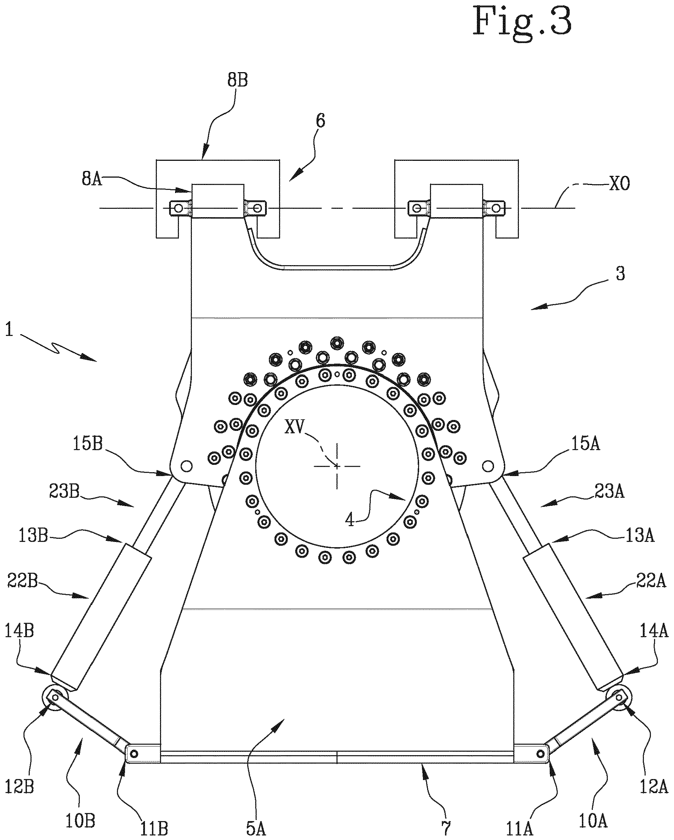

- Figure 3 shows a schematic front view of the embodiment of the connecting device, illustrated in Figure 1, in an intermediate configuration between the first and the second configuration, illustrated respectively in Figure 1 and in Figure 2;
- Figure 4 shows an exploded perspective view of certain details of the embodiment of Figure 1;
- Figure 5 shows an exploded perspective view of certain details of the embodiment of Figure 1;
- Figure 6 shows a schematic front view of a second embodiment of the connecting device according to the invention in a third configuration;
- Figure 7 shows a schematic front view of the embodiment of the connecting device, illustrated in Figure 6 in a fourth configuration;
- Figure 8 shows a perspective view of certain details of the embodiment of Figure 6;
- Figure 9 shows a perspective view of certain details of the embodiment of Figure 6. With reference to the accompanying drawings, the numeral 1 denotes a device for connecting a first unit 2A and a second unit 2B of an articulated vehicle.

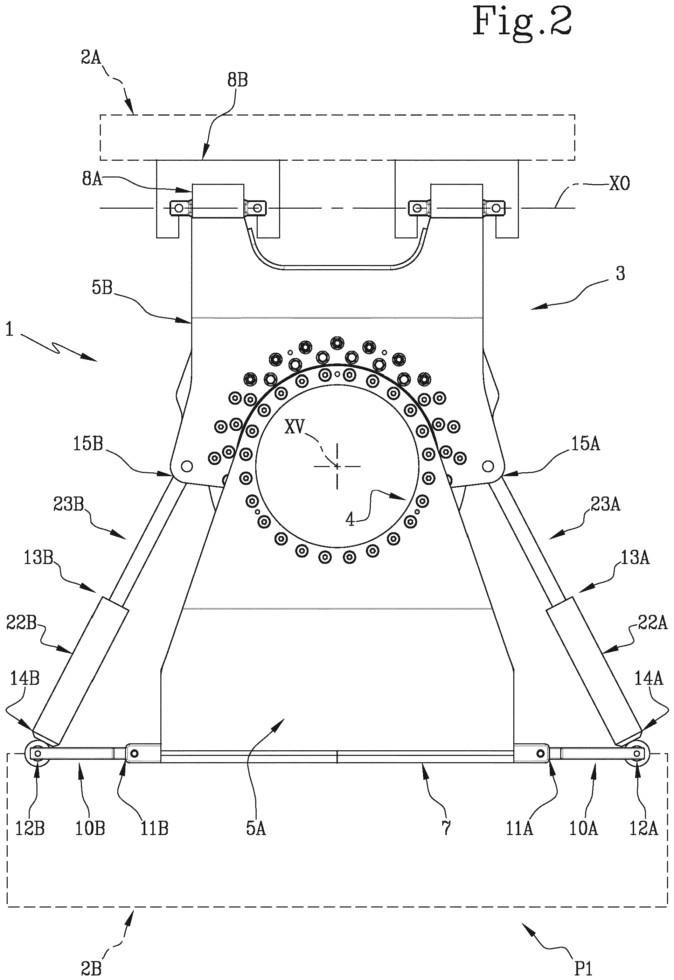

The first unit 2A and the second unit 2B are illustrated with a dashed line in Figure 2 and for simplicity not illustrated in the other drawings.

It should be noted that the connecting device 1 also defines a pulling device of the unit located at the rear or a pushing device of the unit located at the front.

It should be noted that, if the device (motor) for moving the vehicle is positioned on board the rear unit, the rear unit in the normal operation of the vehicle applies, through the device 1 itself, a pushing action on the front unit.

Thus, in this case, the device 1 transmits a pushing force from the rear unit to the front unit.

On the other hand, it should be noted that, if the device (motor) for moving the vehicle is positioned on board the front unit, the front unit in the normal operation of the vehicle applies a pulling action on the front unit.

For this reason, in this case, the device 1 transmits a pulling force from the front unit to the rear unit.

For this reason, more generally, the device 1 is a connecting and pulling device or a connecting and pushing device.

Preferably, the articulated vehicle is a vehicle for transporting passengers (yet more preferably an articulated bus).

The device 1 for connecting a first unit 2A and a second unit 2B of an articulated vehicle comprises means 3 for connecting the first and second units (2A, 2B), configured to allow a movement on a horizontal plane of said first and second units (2A, 2B), to vary the relative position on the horizontal plane between said first and second units (2A, 2B), and a movement on a vertical plane of said first and second units (2A, 2B), for varying the relative position on the vertical plane between said first and second units (2A, 2B), said connecting means 3 comprising a first rotary joint 4 having a first portion 5A and a second portion 5B rotating relative to each other with respect to a vertical axis XV to allow the above-mentioned movement on the horizontal plane of said first and second units (2A, 2B).

Advantageously, allowing a movement on a vertical plane of said first and second unit (2A, 2B) allows the articulated vehicle to move easily on sloping roads and overcome any holes or irregularities of the ground.

According to another aspect, the device 1 comprises a pair of connecting elements (10A, 10B), having a first end (11A, 11B) and a second end (12A, 12B), operatively connected, in use, on both sides to the first portion 5A in a rotatable fashion at their first end.

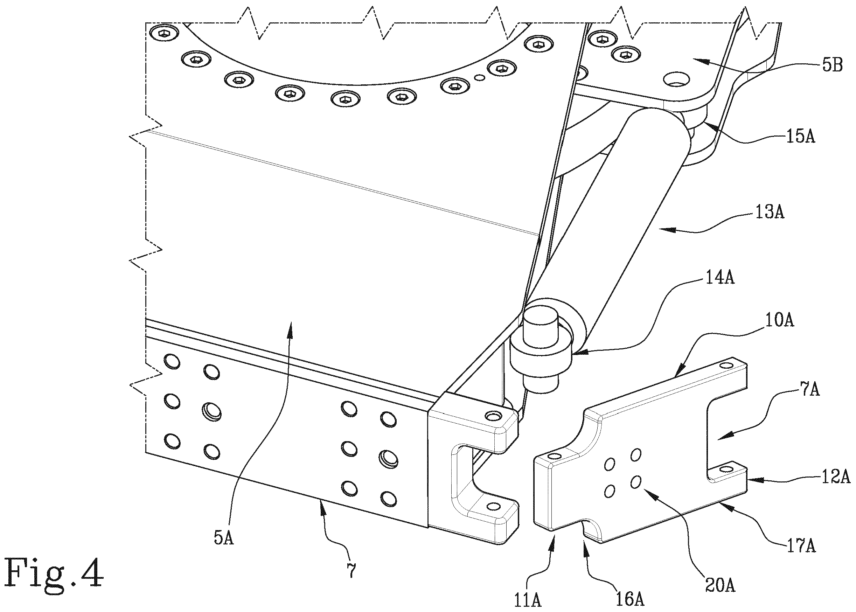

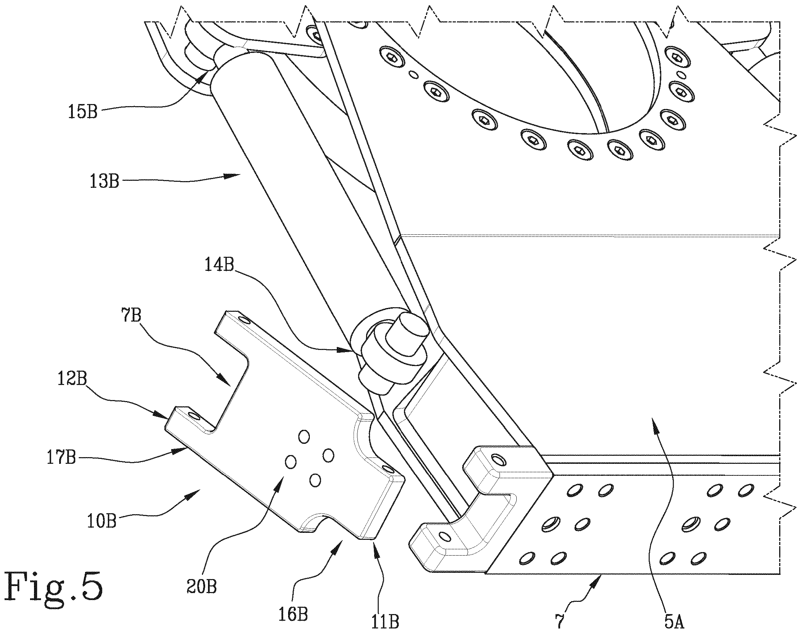

More precisely, it should be noted that one of the two connecting elements 10A has its first end 11A connected to the right side of the first portion 5A (illustrated in Figure 4) whilst the other of the two connecting elements 10B has its first end 11B connected to the left-hand side of the first portion 5A (illustrated in Figure 5).

According to an embodiment, the connecting elements (10A, 10B) are rotatably coupled to the first portion 5A by means of pins or joints at the first end (11A, 11B).

According to the invention, the device 1 also comprises a pair of shock absorbers (13A, 13B), each having a first end (14A, 14B) and a second end (15A, 15B).

According to an aspect, the first end (14A, 14B) of each of said shock absorbers (13A, 13B) is connected respectively to the second end (12A, 12B) respectively of one of said connecting elements (10A, 10A), in a rotatable fashion, and the second end of each of said shock absorbers (13A, 13B) is connected, in a rotatable fashion, to the second portion 5B of the connecting means 3.

Preferably, in use, when one of said shock absorbers (13A, 13B) is in compression, the other of said shock absorbers (13A, 13B) is in traction, said shock absorbers (13A, 13B) being configured to be active following a relative movement of the units (2A, 2B).

According to a preferred embodiment, the shock absorbers (13A, 13B) comprise a jacket (22A, 22B) and a movable rod (23A, 23B) slidably coupled to the jacket (22A, 22B).

Advantageously, having a jacket (22A, 22B) and a movable rod (23A, 23B) slidably coupled to it, allows the shock absorbers (13A, 13B) to pass from a configuration of maximum dimensions, when in operation, to a configuration of minimum dimensions during the transport.

Preferably, said shock absorbers (13A, 13B) are connected to a hydraulic circuit, designed to control the pressure of a fluid (liquid, preferably oil) inside the shock absorbers (13A, 13B).

According to an aspect, the connecting elements (10A, 10B) are hinged at the first end (11A, 11B) to the first portion (5A) and at the second end (12A, 12B) to the first end (14A, 14B) of each of the shock absorbers (13A, 13B).

Advantageously, the connecting elements (10A, 10B) already hinged and mounted allow the shock absorbers (13A, 13B) to be positioned at a correct distance from the first portion 5A.

Advantageously, the presence of connecting elements (10A, 10B) already hinged and mounted allows the device to be sold without having to provide spacers for the assembly (as was the case according to prior art solutions).

In effect, the connecting device 1 according to the invention may be assembled by the manufacturer (with all the relative elements correctly connected to each other), controlled and measured and be dispatched, for example to the manufacturer of the vehicle on which the device will be installed, with the connecting elements (10A, 10B) positioned in the non-operating position P2.

In this way, the space (overall dimension) occupied by the connecting device 1 is reduced.

The vehicle manufacturer will, in an extremely simple manner, install the connecting device 1 on the vehicle simply by positioning the connecting elements (10A, 10B) in the operating position P1, without having to perform special adjustments / measurements / checks.

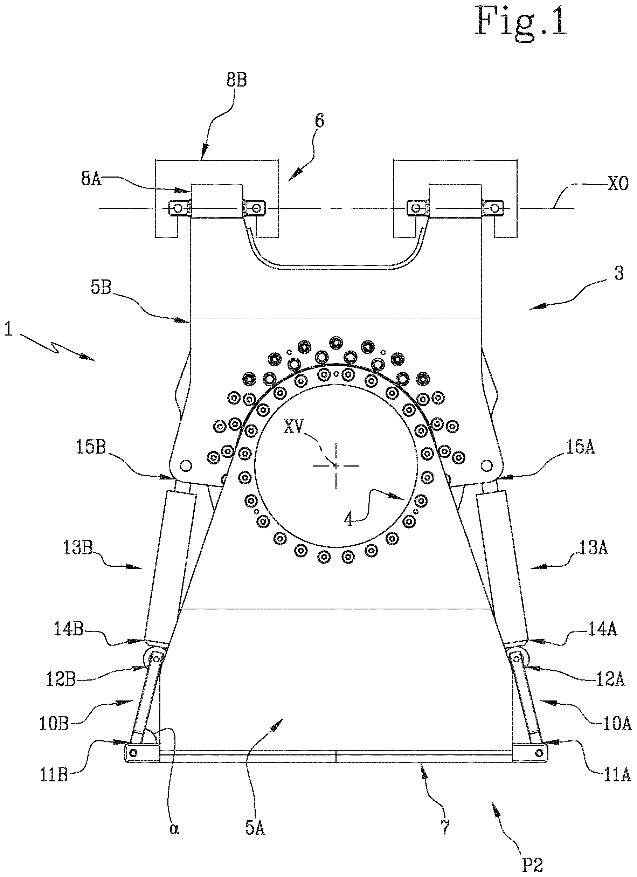

Advantageously, the connecting elements (10A, 10B) already hinged and mounted allow the shock absorbers (13A, 13B) to adopt an angle (α) which is correct relative to the first portion 5A (as illustrated in Figure 1).

More generally speaking, it should be noticed that at least one portion of the connecting means 3 is designed to transmit, as the vehicle travels, a pulling or pushing force between the two units.

Preferably, at least a portion of the means 3 is made of composite material reinforced with fibre.

According to an aspect, the movement on a horizontal plane between the first portion 5A and the second portion 5B is a rotation about a vertical axis XV.

According to an aspect, the movement on a horizontal plane between the first portion 5A and the second portion 5B on a vertical plane is a rotation about a horizontal axis XO.

Preferably, the first and/or the second portion (5A, 5B) is made of composite material reinforced with fibres comprises carbon fibres.

According to another aspect, each connecting element (10A, 10B) is movable, in rotation relative to the first portion 5A, between an operating position P1 of maximum dimensions, distal from the first portion 5A, and a non-operating position P2 of minimum dimensions, proximal to the first portion 5A.

Advantageously, positioning the connecting elements (10A, 10B) in the non-operating position P2, illustrated in Figure 2, facilitates the transport of the connecting device as it reduces to a minimum the overall dimensions. Advantageously, positioning the connecting elements (10A, 10B) in the non-operating position P2, illustrated in Figure 2, reduces the space necessary for transporting the connecting device and the associated costs.

According to an aspect, as illustrated in Figure 1, the first portion 5A comprises a connecting wall 7 designed to connect to the second unit 2B. According to another aspect, each connecting element (10A, 10B) is positioned, in the operating position P1 of maximum dimensions, parallel to the connecting wall 7.

According to another aspect, each connecting element (10A, 10B) is positioned, in the non-operating position P2, to form an angle α relative to the connecting wall 7.

In the non-operating position P2 each shock absorber (13A, 13B) has minimum dimensions.

According to an aspect, in the non-operating position P2, as illustrated in Figure 1, each of the shock absorbers (13A, 13B) is aligned with the respective connecting element (10A, 10B).

According to yet another aspect, the connecting means 3 comprise a second rotary joint 6 having a first portion 8A and a second portion 8B rotating relative to each other with respect to a horizontal axis XO to allow the above-mentioned movement on the vertical plane of said first and second unit (2A, 2B).

The connecting elements (10A, 10B) are described in more detail below.

According to a preferred embodiment, each connecting element (10A, 10B) has a plate-like shape.

According to an aspect, each connecting element (10A, 10B) has a first end portion (16A, 16B) and a second end portion (17A, 17B).

According to an embodiment, the second end portion (16A, 16B) of each connecting element (10A, 10B) has a recess (7A, 7B) configured to house the first end (14A, 14B) of each of said shock absorbers (13A, 13B).

According to a preferred embodiment, the recess (7A, 7B) of the second end portion (16A, 16B) is U-shaped.

According to an embodiment, the first end portion (16A, 16B) of each connecting element (10A, 10B) has a narrowing which defines a neck configured to connect to the first portion 5A.

According to an aspect, the narrowing defines for each connecting element (10A, 10B) a protrusion.

Advantageously, the connecting elements (10A, 10B) shaped in this way may be folded and pass from a configuration of maximum dimensions to minimum dimensions.

According to an aspect, as illustrated in Figures 4 and 5, each connecting element (10A, 10B) has a multiplicity of fixing holes (20A, 20B) designed to receive fixing screws (not illustrated) for fixing each connecting element (10A, 10B) with the second unit 2B.

Advantageously, the presence of holes (20A, 20B) and fixing screws allows the connecting elements (10A, 10B) to be fixed to the unit 2B of the vehicle and to keep the connecting elements (10A, 10B) in the operating position P1.

In this description, the term "element" means an object comprising one or more parts which are coupled mechanically to each other.

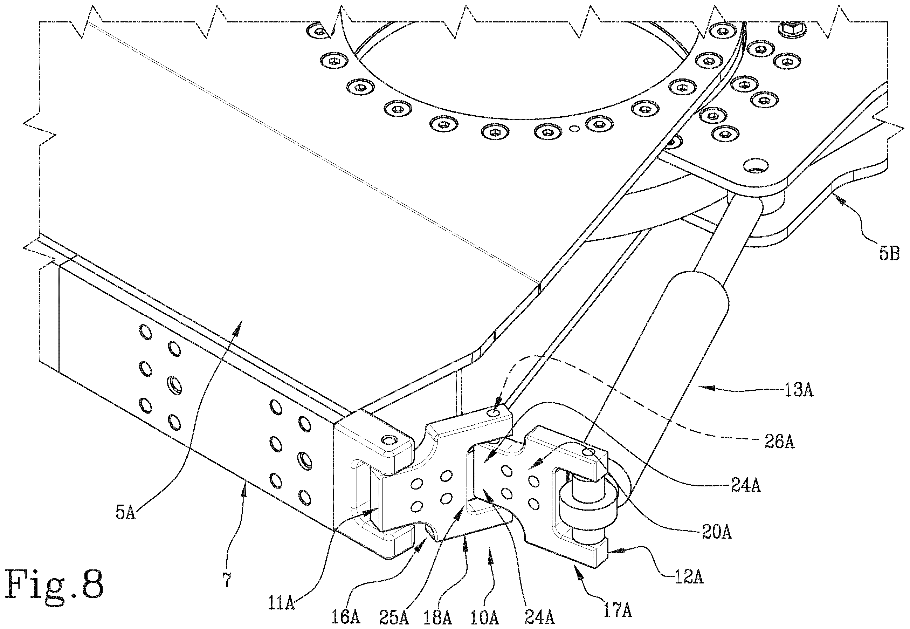

According to an embodiment, as for example illustrated in Figure 8, each connecting element (10A, 10B) has the first end portion (16A, 16B) hinged to the second end portion (17A, 17B) at respective hinging ends (18A, 18B, 19A, 19B). In other words, each connecting element (10A, 10B) comprises a hinge equipped with a pin (26A, 26B) which allows the relative rotation between the first end portion (16A, 16B) and the second end portion (17A, 17B) about the axis of the pin.

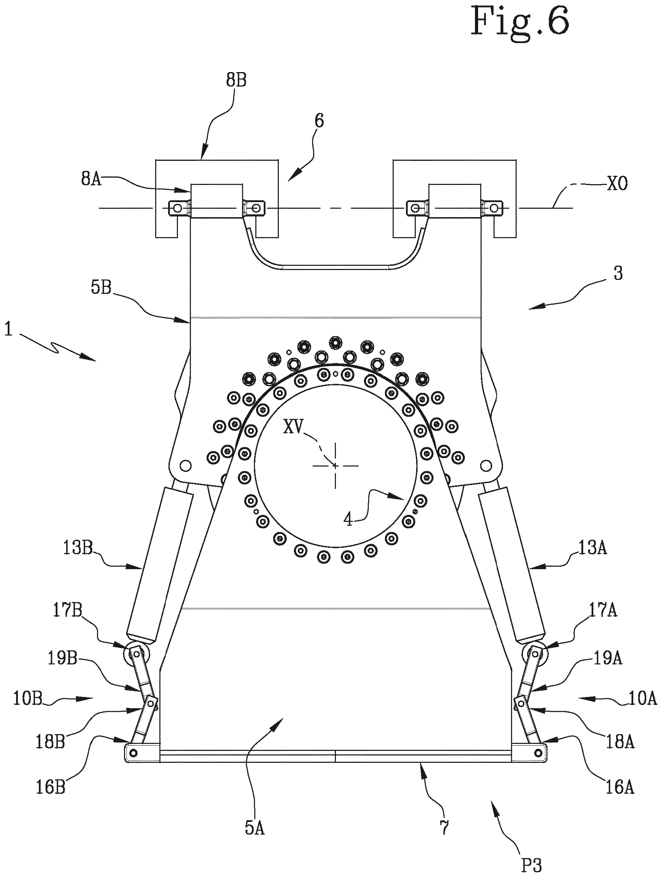

According to an aspect, as illustrated in Figure 6, the first end portion (16A, 16B) and the second end portion (17A, 17B) may be positioned in a non-operating position P3 of minimum dimensions wherein the end portions are as close as possible to the first portion 5A of the first joint 4.

Advantageously, the non-operating position P3 makes it possible to obtain a minimum size of the connecting device 1 facilitating the transport operations and reducing the costs connected to the transport.

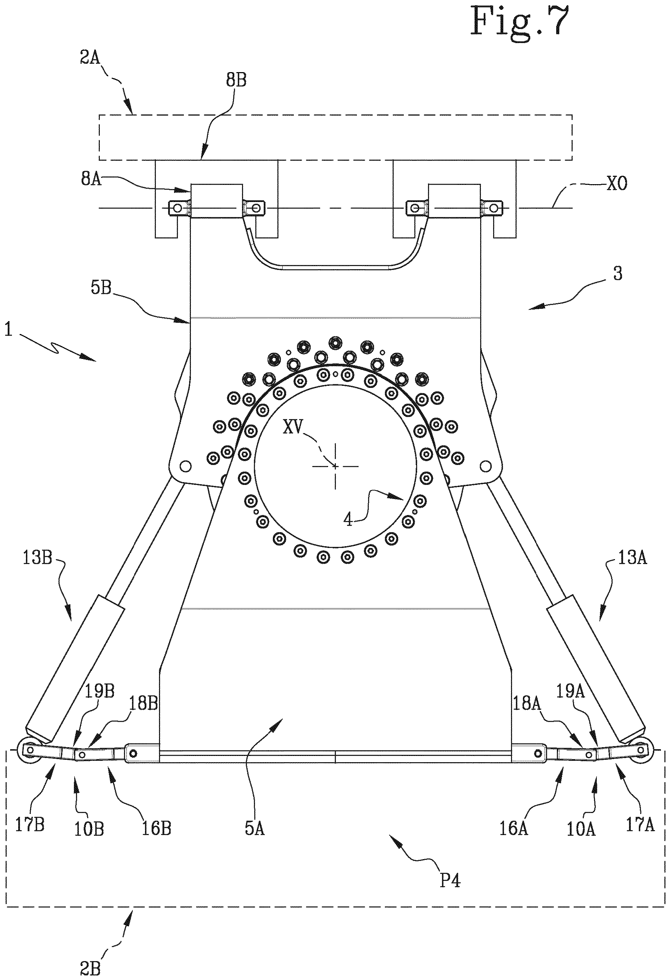

According to an aspect, as illustrated in Figure 7, the first end portion (16A, 16B) and the second end portion (17A, 17B) can be positioned in an operating position P4 of maximum dimensions, distal from the first portion 5A, wherein the end portions are aligned with the connecting wall 7 of the first portion 5A.

According to an aspect, the first end portion (16A, 16B) and the second end portion (17A, 17B) in the operating position P4 are designed to connect to the second unit 2B.

According to an aspect, the first end portion (16A, 16B) and the second end portion (17A, 17B) are both equipped with fixing holes (20A, 20B).

Advantageously, the presence of holes (20A, 20B) and fixing screws makes it possible to fix the first end portion (16A, 16B) and the second end portion (17A, 17B) of the elements (10A, 10B) for connecting to the unit 2B of the vehicle to keep them in the operating position P4.

According to an embodiment, at the respective hinging ends (18A, 18B, 19A, 19B), the first end portion (16A, 16B) has a hinging narrowing (24A, 24B) and the second end portion (17A, 17B) has a hinging recess (25A, 25B).

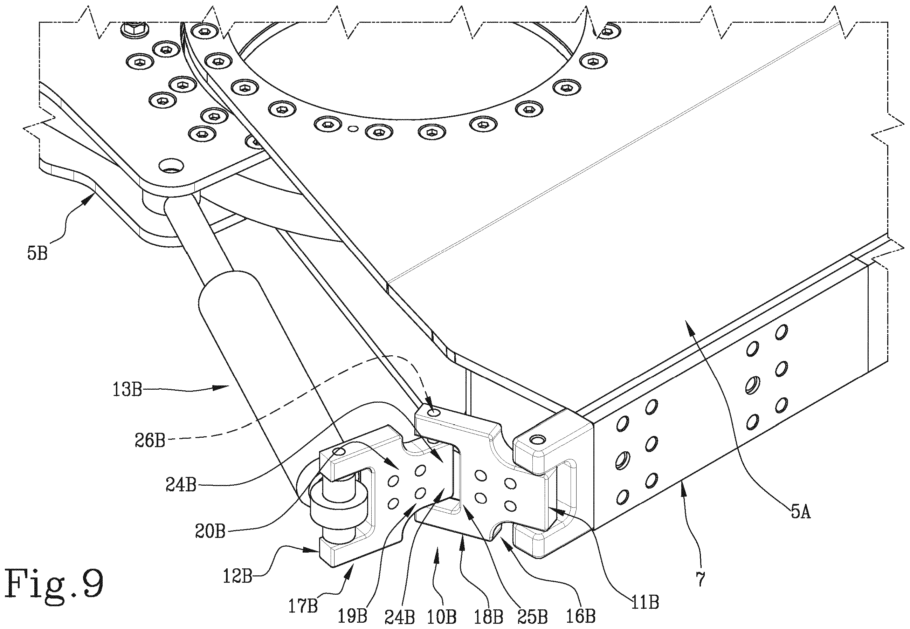

According to another embodiment, illustrated in Figure 8 (for the right-hand side) and in Figure 9 (for the left-hand side), at the respective hinging ends (18A, 18B, 19A, 19B), the first end portion (16A, 16B) has a hinging recess (25A, 25B) made in it and the second end portion (17A, 17B) has a hinging narrowing (24A, 24B).

According to an aspect, the hinging narrowing (24A, 24B) defines a protrusion shaped to be inserted into the hinging recess (25A, 25B).

The hinging narrowing (24A, 24B) and the hinging recess (25A, 25B) are coupled with a clearance in such a way as to guarantee a rotation between the first end portion (16A, 16B) and the second end portion (17A, 17B).

According to an aspect, the hinging narrowing (24A, 24B) and the hinging recess (25A, 25B) have holes made in them which allow a pin (26A, 26B) to be inserted.

The pin (26A, 26B), the hinging narrowing (24A, 24B) and the hinging recess (25A, 25B) define a hinge which allows the relative rotation between the first end portion (16A, 16B) and the second end portion (17A, 17B) about the axis of the pin.

The invention defines more generally an articulated vehicle 100, comprising a first unit 2A and a second unit 2B and a device 1 for connecting said first unit 2A and second unit 2B as described above.

## Claims

1. A device (1) for connecting a first unit (2A) and a second unit (2B) of an articulated vehicle, comprising:
- means (3) for connecting the first and second units (2A, 2B), configured to allow a movement on a horizontal plane of said first and second units (2A, 2B), to vary the relative position on said horizontal plane between said first and second units (2A, 2B), and a movement on a vertical plane of said first and second units (2A, 2B), for varying the relative position on said vertical plane between said first and second units (2A, 2B), said connecting means (3) comprising a first rotary joint (4) having a first portion (5A) and a second portion (5B) rotating relative to each other with respect to a vertical axis (XV) to allow the above-mentioned movement on the horizontal plane of said first and second units (2A, 2B);
- a pair of connecting elements (10A, 10B), having a first end (11A, 11B) and a second end (12A, 12B), operatively connected, in use, on both sides to the first portion (5A) in a rotatable fashion at their first end (11A, 11B);
- a pair of shock absorbers (13A, 13B), each having a first end (14A, 14B) and a second end (15A, 15B), the first end (14A, 14B) of each of said shock absorbers (13A, 13B) being connected to the second end (12A, 12B) respectively of one of said connecting elements (10A, 10B), in a rotatable fashion, and the second end of each of said shock absorbers (13A, 13B) being connected, in a rotatable fashion, to the second portion (5B) of the connecting means (3) and wherein:
- each connecting element (10A, 10B) is movable, in rotation relative to the first portion (5A), between an operating position (P1) of maximum dimensions, distal from the first portion (5A), and a non-operating position (P2) of minimum dimensions, proximal to the first portion (5A);
- the first portion (5A) comprises a connecting wall (7) designed to connect to the second unit (2B);
- each connecting element (10A, 10B) is positioned, in the operating position (P1) of maximum dimensions, parallel to the connecting wall (7) and is positioned, in the non-operating position (P2), to form an angle (α) relative to the connecting wall (7), having each shock absorber (13A, 13B) of minimum dimensions in the non-operating position (P2);
- each connecting element (10A, 10B) has a first end portion (16A, 16B) and a second end portion (17A, 17B).
- the second end portion (16A, 16B) of each connecting element (10A, 10B) has a recess (7A, 7B) configured to house the first end (14A, 14B) of each of said shock absorbers (13A, 13B).

2. The device (1) according to any one of the preceding claims, wherein the connecting means (3) comprise a second rotary joint (6) having a first portion (8A) and a second portion (8B) rotating relative to each other with respect to a horizontal axis (XO) to allow the above-mentioned movement on the vertical plane of said first and second unit (2A, 2B).

3. The device (1) according to any one of the preceding claims, wherein each connecting element (10A, 10B) has a plate-like shape.

4. The device (1) according to claim 3, wherein the recess (7A, 7B) of the second end portion (16A, 16B) is U-shaped.

5. The device (1) according to any one of claims 2 to 4, wherein the first end portion (16A, 16B) of each connecting element (10A, 10B) has a narrowing, said narrowing defining a neck configured to connect to the first portion (5A).

6. The device (1) according to any one of the preceding claims, wherein each connecting element (10A, 10B) has a multiplicity of fixing holes (20A, 20B) designed to receive fixing screws for fixing each connecting element (10A, 10B) with the second unit (2B).

7. The device (1) according to any one of claims 2 to 5, wherein the first end portion (16A, 16B) and the second end portion (17A, 17B) are hinged to each other at respective hinging ends (18A, 18B, 19A, 19B).

8. The device (1) according to claim 7, wherein the first end portion (16A, 16B) and the second end portion (17A, 17B) are both equipped with fixing holes.

9. The device (1) according to claim 7 or 8, wherein, at the respective hinging ends (18A, 18B, 19A, 19B), one between the first end portion (16A, 16B) or the second end portion (17A, 17B) has a hinge narrowing (24A, 24B), the other of either the second end portion (17A, 17B) or the first end portion (16A, 16B) has a hinge recess (25A, 25B) made in it, the hinge narrowing (24A, 24B) defining a protrusion shaped to be inserted into the hinging recess (25A, 25B).

10. The device (1) according to any one of the preceding claims, wherein each of said shock absorbers (13A, 13B) comprises a jacket (22A, 22B) and a movable rod (23A, 23B) slidably coupled to the jacket (22A, 22B).

11. An articulated vehicle, comprising a first unit (2A) and a second unit (2B) and a device (1) for connecting said first unit (2A) and second unit (2B) according to any one of the preceding claims.

## Patentansprüche

1. Vorrichtung (1) zum Verbinden einer ersten Einheit (2A) und einer zweiten Einheit (2B) eines Gelenkfahrzeugs, umfassend:
- Mittel (3) zum Verbinden der ersten und der zweiten Einheit (2A, 2B), die ausgelegt sind, um eine Bewegung auf einer horizontalen Ebene der ersten und der zweiten Einheit (2A, 2B) zu erlauben, um die relative Position auf der horizontalen Ebene zwischen der ersten und der zweiten Einheit (2A, 2B) zu variieren, und eine Bewegung auf einer vertikalen Ebene der ersten und der zweiten Einheit (2A, 2B), um die relative Position auf der vertikalen Ebene zwischen der ersten und der zweiten Einheit (2A, 2B) zu variieren, wobei die Verbindungsmittel (3) ein erstes rotatorisches Gelenk (4) umfassen, aufweisend einen ersten Abschnitt (5A) und einen zweiten Abschnitt (5B), die sich relativ zueinander in Bezug auf eine vertikale Achse (XV) drehen, um die oben genannte Bewegung der ersten und der zweiten Einheit (2A, 2B) auf der horizontalen Ebene zu erlauben;
- ein Paar von Verbindungselementen (10A, 10B), aufweisend ein erstes Ende (11A, 11B) und ein zweites Ende (12A, 12B), die in Verwendung auf beiden Seiten betriebswirksam mit dem ersten Abschnitt (5A) drehbar an deren ersten Ende (11A, 11B) verbunden sind;
- ein Paar von Stoßdämpfern (13A, 13B), jeweils aufweisend ein erstes Ende (14A, 14B) und ein zweites Ende (15A, 15B), wobei das erste Ende (14A, 14B) eines jeden der Stoßdämpfer (13A, 13B) mit dem zweiten Ende (12A, 12B) jeweils von einem der Verbindungselemente (10A, 10B) drehbar verbunden ist, und das zweite Ende eines jeden der Stoßdämpfer (13A, 13B) drehbar mit dem zweiten Abschnitt (5B) der Verbindungsmittel (3) verbunden ist, und wobei
- ein jedes Verbindungselement (10A, 10B) in Rotation relativ zum ersten Abschnitt (5A) zwischen einer Betriebsposition (P1) maximaler Abmessungen distal vom ersten Abschnitt (5A) und einer Nichtbetriebsposition (P2) minimaler Abmessungen proximal zum ersten Abschnitt (5A) bewegbar ist;
- der erste Abschnitt (5A) eine Verbindungswand (7) umfasst, die ausgestaltet ist, um sich mit der zweiten Einheit (2B) zu verbinden;
- ein jedes Verbindungselement (10A, 10B) in der Betriebsposition (P1) maximaler Abmessungen parallel zur Verbindungswand (7) positioniert ist und in der Nichtbetriebsposition (P2) positioniert ist, um einen Winkel (a) relativ zur Verbindungswand (7) zu formen, aufweisend einen jeden Stoßdämpfer (13A, 13B) minimaler Abmessungen in der Nichtbetriebsposition (P2);
- ein jedes Verbindungselement (10A, 10B) einen ersten Endabschnitt (16A, 16B) und einen zweiten Endabschnitt (17A, 17B) aufweist;
- der zweite Endabschnitt (16A, 16B) eines jeden Verbindungselements (10A, 10B) eine Ausnehmung (7A, 7B) aufweist, die ausgelegt ist, um das erste Ende (14A, 14B) eines jeden der Stoßdämpfer (13A, 13B) aufzunehmen.

2. Vorrichtung (1) nach einem der vorhergehenden Ansprüche, wobei die Verbindungsmittel (3) ein zweites rotatorisches Gelenk (6) umfassen, aufweisend einen ersten Abschnitt (8A) und einen zweiten Abschnitt (8B), die sich relativ zueinander in Bezug auf eine horizontale Achse (XO) drehen, um die oben genannte Bewegung der ersten und der zweiten Einheit (2A, 2B) auf der vertikalen Ebene zu erlauben.

3. Vorrichtung (1) nach einem der vorhergehenden Ansprüche, wobei ein jedes Verbindungselement (10A, 10B) eine plattenähnliche Form aufweist.

4. Vorrichtung (1) nach Anspruch 3, wobei die Ausnehmung (7A, 7B) des zweiten Endabschnitts (16A, 16B) U-förmig ist.

5. Vorrichtung (1) nach einem der Ansprüche 2 bis 4, wobei der erste Endabschnitt (16A, 16B) eines jeden Verbindungselements (10A, 10B) eine Verengung aufweist, wobei die Verengung einen Hals definiert, der ausgelegt ist, um sich mit dem ersten Abschnitt (5A) zu verbinden.

6. Vorrichtung (1) nach einem der vorhergehenden Ansprüche, wobei ein jedes Verbindungselement (10A, 10B) eine Mehrzahl von Fixierlöchern (20A, 20B) aufweist, die ausgestaltet sind, um Fixierschrauben zum Fixieren eines jeden Verbindungselements (10A, 10B) mit der zweiten Einheit (2B) aufzunehmen.

7. Vorrichtung (1) nach einem der Ansprüche 2 bis 5, wobei der erste Endabschnitt (16A, 16B) und der zweite Endabschnitt (17A, 17B) an jeweiligen Gelenkbefestigungsenden (18A, 18B, 19A, 19B) gelenkig aneinander befestigt sind.

8. Vorrichtung (1) nach Anspruch 7, wobei der erste Endabschnitt (16A, 16B) und der zweite Endabschnitt (17A, 17B) beide mit Fixierlöchern ausgestattet sind.

9. Vorrichtung (1) nach Anspruch 7 oder 8, wobei entweder der erste Endabschnitt (16A, 16B) oder der zweite Endabschnitt (17A, 17B) an den jeweiligen Gelenkbefestigungsenden (18A, 18B, 19A, 19B) eine Gelenkbefestigungsverengung (24A, 24B) aufweist, der andere, also entweder der zweite Endabschnitt (17A, 17B) oder der erste Endabschnitt (16A, 16B), eine Gelenkbefestigungsausnehmung (25A, 25B), die in ihm ausgebildet ist, aufweist, wobei die Gelenkbefestigungsverengung (24A, 24B) einen Vorsprung definiert, der ausgeformt ist, um in die Gelenkbefestigungsausnehmung (25A, 25B) eingefügt zu werden.

10. Vorrichtung (1) nach einem der vorhergehenden Ansprüche, wobei ein jeder der Stoßdämpfer (13A, 13B) einen Mantel (22A, 22B) und einen bewegbaren Stab (23A, 23B) aufweist, der verschiebbar mit dem Mantel (22A, 22B) gekuppelt ist.

11. Gelenkfahrzeug, umfassend eine erste Einheit (2A) und eine zweite Einheit (2B) und eine Vorrichtung (1) zum Verbinden der ersten Einheit (2A) und der zweiten Einheit (2B) nach einem der vorhergehenden Ansprüche.

## Revendications

1. Dispositif (1) de connexion d'une première unité (2A) et d'une seconde unité (2B) d'un véhicule articulé, comprenant :
- des moyens (3) de connexion des première et seconde unités (2A, 2B), configurés pour permettre un mouvement sur un plan horizontal desdites première et seconde unités (2A, 2B), pour faire varier la position relative sur ledit plan horizontal entre lesdites première et seconde unités (2A, 2B), et un mouvement sur un plan vertical desdites première et seconde unités (2A, 2B), pour faire varier la position relative sur ledit plan vertical entre lesdites première et seconde unités (2A, 2B), lesdits moyens de connexion (3) comprenant un premier joint tournant (4) ayant une première portion (5A) et une seconde portion (5B) tournant l'une par rapport à l'autre par rapport à un axe vertical (XV) pour permettre le mouvement mentionné ci-dessus sur le plan horizontal desdites première et seconde unités (2A, 2B) ;
- une paire d'éléments de connexion (10A, 10B), ayant une première extrémité (11A, 11B) et une seconde extrémité (12A, 12B), fonctionnellement connectés, en cours d'utilisation, des deux côtés de la première portion (5A) de manière rotative à leur première extrémité (11A, 11B) ;
- une paire d'amortisseurs (13A, 13B), ayant chacun une première extrémité (14A, 14B) et une seconde extrémité (15A, 15B), la première extrémité (14A, 14B) de chacun desdits amortisseurs (13A, 13B) étant connectée à la seconde extrémité (12A, 12B) respectivement de l'un desdits éléments de connexion (10A, 10B), de manière rotative, et la seconde extrémité de chacun desdits amortisseurs (13A, 13B) étant connectée, de manière rotative, à la seconde portion (5B) des moyens de connexion (3) et dans lequel :
- chaque élément de connexion (10A, 10B) est mobile, en rotation par rapport à la première portion (5A), entre une position de fonctionnement (P1) de dimensions maximales, distale de la première portion (5A), et une position hors fonctionnement (P2) de dimensions minimales, proximale de la première portion (5A) ;
- la première portion (5A) comprend une paroi de connexion (7) conçue pour se connecter à la seconde unité (2B) ;
- chaque élément de connexion (10A, 10B) est positionné, dans la position de fonctionnement (P1) de dimensions maximales, parallèlement à la paroi de connexion (7) et est positionné, dans la position hors fonctionnement (P2), pour former un angle (a) par rapport à la paroi de connexion (7), ayant chaque amortisseur (13A, 13B) de dimensions minimales dans la position hors fonctionnement (P2) ;
- chaque élément de connexion (10A, 10B) a une première portion d'extrémité (16A, 16B) et une seconde portion d'extrémité (17A, 17B).
- la seconde portion d'extrémité (16A, 16B) de chaque élément de connexion (10A, 10B) comporte un évidement (7A, 7B) configuré pour loger la première extrémité (14A, 14B) de chacun desdits amortisseurs (13A, 13B).

2. Dispositif (1) selon l'une quelconque des revendications précédentes, dans lequel les moyens de connexion (3) comprennent un second joint rotatif (6) ayant une première portion (8A) et une seconde portion (8B) tournant l'une par rapport à l'autre par rapport à un axe horizontal (XO) pour permettre le mouvement susmentionné sur le plan vertical desdites première et seconde unités (2A, 2B).

3. Dispositif (1) selon l'une quelconque des revendications précédentes, dans lequel chaque élément de connexion (10A, 10B) a une forme de plaque.

4. Dispositif (1) selon la revendication 3, dans lequel l'évidement (7A, 7B) de la seconde portion d'extrémité (16A, 16B) a une forme de U.

5. Dispositif (1) selon l'une quelconque des revendications 2 à 4, dans lequel la première portion d'extrémité (16A, 16B) de chaque élément de connexion (10A, 10B) présente un rétrécissement, ledit rétrécissement définissant un col configuré pour se connecter à la première portion (5A).

6. Dispositif (1) selon l'une quelconque des revendications précédentes, dans lequel chaque élément de connexion (10A, 10B) comporte une multiplicité de trous de fixation (20A, 20B) conçus pour recevoir des vis de fixation pour fixer chaque élément de connexion (10A, 10B) à la seconde unité (2B).

7. Dispositif (1) selon l'une quelconque des revendications 2 à 5, dans lequel la première portion d'extrémité (16A, 16B) et la seconde portion d'extrémité (17A, 17B) sont articulées l'une à l'autre au niveau des extrémités d'articulation respectives (18A, 18B, 19A, 19B).

8. Dispositif (1) selon la revendication 7, dans lequel la première portion d'extrémité (16A, 16B) et la seconde portion d'extrémité (17A, 17B) sont toutes deux équipées de trous de fixation.

9. Dispositif (1) selon la revendication 7 ou 8, dans lequel, aux extrémités d'articulation respectives (18A, 18B, 19A, 19B), l'une entre la première portion d'extrémité (16A, 16B) ou la seconde portion d'extrémité (17A, 17B) comporte un rétrécissement d'articulation (24A, 24B), l'autre de la seconde portion d'extrémité (17A, 17B) ou de la première portion d'extrémité (16A, 16B) comporte un évidement d'articulation (25A, 25B) réalisé dans celle-ci, le rétrécissement d'articulation (24A, 24B) définissant une saillie formée pour être insérée dans l'évidement d'articulation (25A, 25B).

10. Dispositif (1) selon l'une quelconque des revendications précédentes, dans lequel chacun desdits amortisseurs (13A, 13B) comprend une chemise (22A, 22B) et une tige mobile (23A, 23B) couplée de manière coulissante à la chemise (22A, 22B).

11. Véhicule articulé, comprenant une première unité (2A) et une seconde unité (2B) et un dispositif (1) de connexion de ladite première unité (2A) et ladite seconde unité (2B) selon l'une quelconque des revendications précédentes.
